# EUROPEAN PATENT APPLICATION

(11) **EP 4 607 247 A1**
(43) Date of publication of application: **27.08.2025**
(21) Application number: 25157768.0
(22) Date of filing: 13.02.2025
(51) Int. Cl.: G01V 1/18

(54) **LOW CROSS FEED HYDROPHONE AND METHOD OF MANUFACTURE**

(30) Priority: 16.02.2024 US 202463554635 P; 10.02.2025 US 202519050060
(71) Applicant: PGS Geophysical AS, 0216 Oslo (NO)
(72) Inventor: FERNIHOUGH, Robert Alexis Peregrin, Texas, 10451 (US)
(74) Representative: Gill Jennings & Every LLP

(57) **Abstract**

A hydrophone device body is formed by first and second electrically conductive enclosures disposed on opposite sides of an electrically insulative member. Electrically conductive surfaces of the device's positive and negative electrodes on the exterior of the device body are symmetrical about the device body. When placed appropriately in a submersible container, such as along the central longitudinal axis of a seismic streamer or cable, the device is resistant to cross feed noise that couples to its electrodes from outside the streamer or cable.

## Description

### Cross Reference to Related Applications

This application claims benefit to the filing date of prior US Patent Application Number 63/554,635, filed on 2024-02-16 (the "Provisional Application").

### Background

"Cross feed" is a term used to describe the effect of an electrical signal in one channel undesirably coupling into another channel via a parasitic impedance that exists between them. Cross feed can occur within marine seismic sensor systems such as those in seismic streamers, ocean bottom cables, or ocean bottom nodes. For example, voltage and/or current fluctuations in power supply lines, telemetry lines, control lines, or any auxiliary lines, can electrically couple into seismic sensor channels and thus interfere with the small seismic signal voltages that are generated by the seismic sensors.

To combat cross feed in marine seismic sensor systems, differential amplifiers have been employed in conjunction with unscreened, twisted-pair conductors that couple the small signals from the seismic sensors to the inputs of the differential amplifier. The output of a perfect differential amplifier is equal to the difference between the signals presented at its two inputs, and each conductor in a tightly twisted pair of almost identical conductors will have almost identical parasitic impedance to any point in space. The intention in such designs has been that any undesirable cross feed signals will be induced identically in each of the twisted pair's conductors so that identical "common mode" cross feed signals are presented at each input of the differential amplifier. Because the output of the differential amplifier is proportional to the difference between the signals at its inputs, in theory the identically induced common mode cross feed signals should effectively cancel and should therefore not appear at the differential amplifier's output.

In practice, the just-described scheme has not worked perfectly in marine seismic sensor systems. The result has been that undesirable cross feed signals do in fact appear with significant amplitude on the output of the differential amplifiers, despite the use of high-quality twisted pair wiring between the seismic sensors and the differential amplifier inputs. A need therefore exists for techniques that more effectively address the problem of cross feed in marine seismic sensor systems.

### Summary of Disclosure

Disclosed herein is a hydrophone, comprising: a hermetically sealed device body defining an interior void and a central longitudinal axis and comprising a first electrically conductive enclosure and a second electrically conductive enclosure disposed on opposite sides of an electrically insulative member, wherein each electrically conductive enclosure comprises a flat portion oriented orthogonal to the central longitudinal axis, and wherein electrically conductive surfaces of the exterior of the device body are symmetrical about a plane that passes through the electrically insulative member in a direction orthogonal to the central longitudinal axis; a first piezoelectric element fixedly attached to the flat portion of the first electrically conductive enclosure with its positive electrode electrically coupled to the first electrically conductive enclosure and its negative electrode facing the interior void; and a second piezoelectric element fixedly attached to the flat portion of the second electrically conductive enclosure with its negative electrode electrically coupled to the second electrically conductive enclosure and its positive electrode facing the interior void; wherein the negative electrode of the first piezoelectric element is electrically coupled to the second electrically conductive enclosure and the positive electrode of the second piezoelectric element is electrically coupled to the first electrically conductive enclosure.

The flat portions of the electrically conductive enclosures may be disposed at opposite ends of the central longitudinal axis.

Each of the electrically conductive enclosures may comprise a blind cylinder.

The electrically insulative member may comprise an open cylinder.

Each of the electrically conductive enclosures may comprise a copper alloy.

Each of the electrically conductive enclosures may comprise brass.

The negative electrode of the first piezoelectric element may be electrically coupled to the second electrically conductive enclosure by means of a first flexible electrical conductor.

The positive electrode of the second piezoelectric element may be electrically coupled to the first electrically conductive enclosure by means of a second flexible electrical conductor.

The first flexible electrical conductor and the second flexible electrical conductor may be disposed in opposite longitudinal halves of the interior void.

The flexible electrical conductor may terminate in a plugged through hole located in a side wall of the electrically conductive enclosure to which it is coupled.

The through hole may be plugged with solder or an electrically conductive sealant.

Each of the piezoelectric elements may be fixedly attached to its respective electrically conductive enclosure by means of electrically conductive adhesive.

The insulative ring may comprise a material selected from the group consisting of: glass/phenolic/epoxy composite, rigid plastic, ceramic, and glass.

A transverse dimension and a longitudinal dimension of the device body may be such that the device body fits inside a seismic streamer, cable, or node.

Also disclosed herein is a hydrophone, comprising: an electrically insulative ring; first and second shallow blind cylinders fixedly attached on opposite sides of the insulative ring such that open ends of the cylinders mate with the insulative ring and interior surfaces of the blind ends of the cylinders face one another along an axis that passes through the insulative ring; a first piezoelectric element fixedly attached to the interior surface of the blind end of the first cylinder; and a second piezoelectric element fixedly attached to the interior surface of the blind end of the second cylinder; wherein an interior facing side of the first piezoelectric element is electrically connected to the second cylinder, and an interior facing side of the second piezoelectric element is electrically connected to the first cylinder.

The electrical connection of the interior facing side of the first piezoelectric element with the second cylinder may comprise a first electrical conductor, one end of which is fixed in a through hole formed in a wall of the second cylinder. The electrical connection of the interior facing side of the second piezoelectric element with the first cylinder may comprise a second electrical conductor, one end of which is fixed in a through hole formed in a wall of the first cylinder.

The first electrical conductor and the second electrical conductor may be fixed in their respective through holes by means of solder or an electrically conductive sealant.

Each of the cylinders may comprise a copper alloy.

A negative electrode of the first piezoelectric element may face an interior of the sensing element. A positive electrode of the second piezoelectric element may face the interior of the sensing element.

The insulative ring may comprise a material selected from the group consisting of: glass/phenolic/epoxy composite, rigid plastic, ceramic, and glass.

Also disclosed herein is a method of manufacturing a hydrophone, comprising: providing first and second identical electrically conductive blind cylinders, each having a through hole in a longitudinal wall thereof; fixedly attaching a first piezoelectric element to an interior side of the blind end of the first cylinder with the positive electrode of the first piezoelectric element electrically coupled to the first cylinder; soldering a first electrical conductor to the negative electrode of the first piezoelectric element; fixedly attaching a second piezoelectric element to an interior side of the blind end of the second cylinder with the negative electrode of the second piezoelectric element electrically coupled to the second cylinder; soldering a second electrical conductor to the positive electrode of the second piezoelectric element; interposing an electrically insulative ring between the open ends of the blind cylinders; feeding the first electrical conductor through the insulative ring and through the through hole in the second cylinder; feeding the second electrical conductor through the insulative ring and through the through hole in the first cylinder; fixedly attaching the cylinders to opposite sides of the insulative ring to form a hermetically sealed device body; filling the through holes in the blind cylinders with solder; and removing portions of the electrical conductors that protrude outside the device body.

### Brief Description of the Drawings

FIGS. 1 and 2 are top and side views, respectively, of an example towed-streamer marine seismic survey system.
FIG. 3 is a side view of an example ocean bottom cable marine seismic survey system.
FIG. 4 is a side view of an example ocean bottom node marine seismic survey system.
FIGS. 5, 6, and 7 are schematic views illustrating various techniques for incorporating seismic sensors into any of the marine seismic survey systems of FIG. 1-4.
FIG. 8 is a schematic view illustrating a portion of a seismic streamer or cable that exhibits cross feed noise, wherein the cross feed noise is coupled in an imbalanced manner to the output nodes of a sensor disposed in the streamer or cable.
FIGS. 9 and 10 are top and sectional side views, respectively, illustrating a conventional hydrophone sensor that exhibits cross feed noise when deployed in the system of FIG. 8.
FIG. 11 is a schematic diagram illustrating an equivalent circuit of the sensor of FIGS. 9 and 10.
FIG. 12 is a sectional view of an enclosure containing a seismic sensor in accordance with embodiments.
FIG. 13 is a schematic view illustrating a portion of a seismic streamer or cable in which a seismic sensor is deployed in a manner consistent with FIG. 12.
FIG. 14 is a side view of a hydrophone according to embodiments.
FIG. 15 is a top view of the hydrophone of FIG. 14.
FIG. 16 is a sectional view of the hydrophone of FIGS. 14 and 15.
FIGS. 17, 18, and 19 are oblique, top, and side views, respectively, of one of the piezoelectric elements in the hydrophone of FIGS. 14-16.
FIGS. 20, 21, and 22 are oblique, top, and side views, respectively, of the insulative ring member in the hydrophone of FIGS. 14-16.
FIGS. 23, 24, and 25 are oblique, top, and side views, respectively, of one of the electrically conductive blind cylinders in the hydrophone of FIGS. 14-16.
FIG. 26 is a sectional view illustrating the top blind cylinder of the hydrophone of FIGS. 14-16 with a piezoelectric element fixedly attached therein.
FIG. 27 is a sectional view illustrating the bottom blind cylinder of the hydrophone of FIGS. 14-16 with a piezoelectric element fixedly attached therein.
FIG. 28 is a sectional view of the blind cylinder and piezoelectric element of FIG. 26 with a wire soldered to the negative electrode of the piezoelectric element.
FIG. 29 is a sectional view of the blind cylinder and piezoelectric element of FIG. 27 with a wire soldered to the positive electrode of the piezoelectric element.
FIG. 30 is a sectional assembly view illustrating the blind cylinders of FIGS. 23-25 disposed on opposite sides of the insulative ring of FIGS. 20-22 with the wires of FIGS. 28-29 passing through the insulative ring and protruding from respective through holes in the longitudinal walls of the blind cylinders.
FIG. 31 is a flow diagram illustrating methods for making a marine seismic sensor system in accordance with embodiments.
FIG. 32 is a flow diagram illustrating a method for manufacturing a geophysical data product using sensors and sensor systems in accordance with embodiments.

### Detailed Description

This disclosure describes multiple embodiments by way of example and illustration. It is intended that characteristics and features of all described embodiments may be combined in any manner consistent with the teachings, suggestions, and objectives contained herein. Thus, phrases such as "in an embodiment," "in one embodiment," and the like, when used to describe embodiments in a particular context, are not intended to limit the described characteristics or features only to the embodiments appearing in that context. It is further intended that the features or elements of each described embodiment may be combined with or substituted for the features or elements of another described embodiment in any desired combination.

The phrases "based on" or "based at least in part on" refer to one or more inputs that can be used directly or indirectly in making some determination or in performing some computation. Use of those phrases herein is not intended to foreclose using additional or other inputs in making the described determination or in performing the described computation. Rather, determinations or computations so described may be based either solely on the referenced inputs or on those inputs as well as others.

The phrase "configured to" as used herein means that the referenced item, when operated, can perform the described function. In this sense, an item can be "configured to" perform a function even when the item is not operating and therefore is not currently performing the function. Use of the phrase "configured to" herein does not necessarily mean that the described item has been modified in some way relative to a previous state.

"Coupled" as used herein refers to a connection between items. Such a connection can be direct, or can be indirect, such as through connections with other intermediate items.

Terms used herein such as "including," "comprising," and their variants, mean "including but not limited to."

Articles of speech such as "a," "an," and "the" as used herein are intended to serve as singular as well as plural references except where the context clearly indicates otherwise.

The term "electrical conductor" as used herein refers to any type of electrical conductor for conducting electric current in an electronic system. For example, a conductor may comprise a metal wire or trace, or may comprise an all-carbon conductor, or may comprise another type of conducting member.

### Marine Seismic Surveying

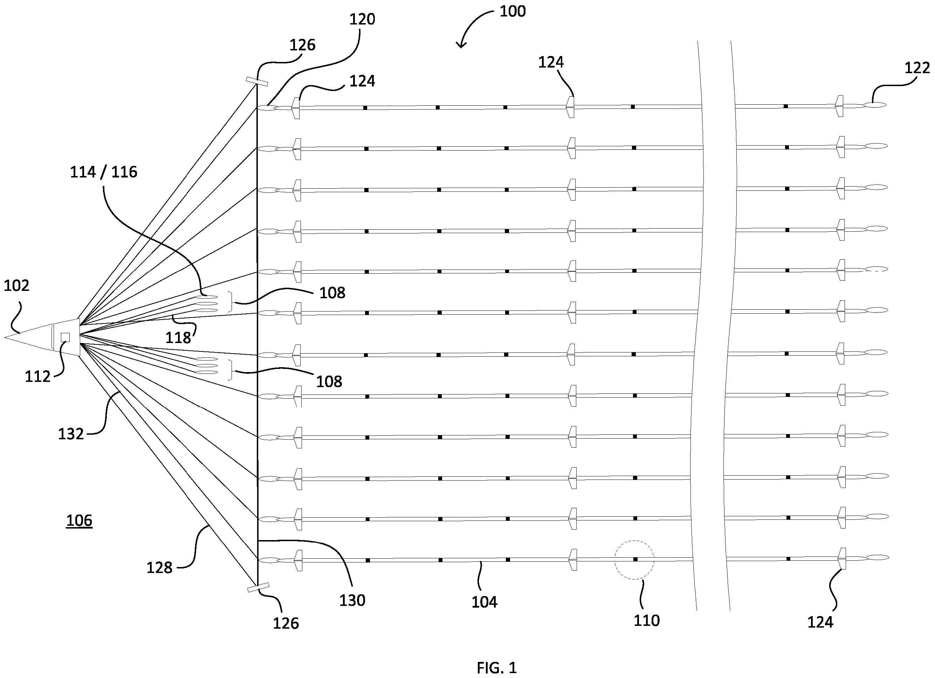

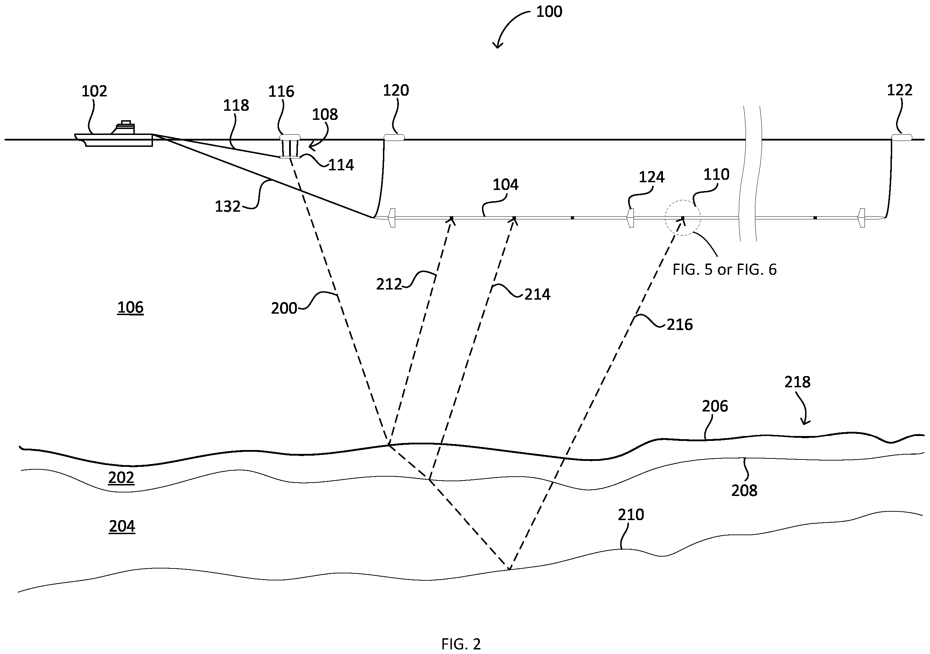

FIGS. 1 and 2 present top and side views, respectively, of an example towed-streamer marine seismic survey system 100. Survey system 100 is representative of a variety of similar geophysical survey systems in which a vessel 102 tows an array of elongate streamers 104 in a body of water 106 such as an ocean, a sea, a bay, or a large lake. Vessel 102 is shown towing twelve streamers 104 in the illustrated example. In other embodiments, any number of streamers may be towed, from as few as one streamer to as many as twenty or more. Embodiments to be described below have useful application in relation to towed-streamer surveys such as that depicted in FIGS. 1 and 2. They may also have useful application in other environments in which other types of sensors or sensor cables are used-for example, in environments that use ocean-bottom sensor cables or ocean-bottom nodes. The terms "streamer" and "cable" may be used interchangeably below.

During a typical marine seismic survey, one or more seismic sources 108 are activated to produce acoustic energy 200 that propagates in body of water 106. Energy 200 penetrates various layers of sediment and rock 202, 204 underlying body of water 106. As it does so, it encounters interfaces 206, 208, 210 between materials having different physical characteristics, including different acoustic impedances. At each such interface, a portion of energy 200 is reflected upward while another portion of the energy is refracted downward and continues toward the next lower interface, as shown. Reflected energy 212, 214, 216 is detected by sensors 110 disposed at intervals along the lengths of streamers 104. In FIGS. 1 and 2, sensors 110 are indicated as black squares inside each of streamers 104. Sensors 110 produce signals corresponding to the reflected energy. These signals are collected and recorded by control equipment 112 located onboard vessel 102. The recorded signals may be processed and analyzed onboard vessel 102 and/or at one or more onshore data centers to produce images of structures within subsurface 218. These images can be useful, for example, in identifying possible locations of hydrocarbon reservoirs within subsurface 218.

In the illustrated example, vessel 102 is shown towing a total of two sources 108. In other systems, different numbers of sources may be used, and the sources may be towed by other vessels, which vessels may or may not tow streamer arrays. Typically, a source 108 includes one or more source subarrays 114, and each subarray 114 includes one or more acoustic emitters such as air guns or marine vibrators. Each subarray 114 may be suspended at a desired depth from a subarray float 116. Compressed air as well as electrical power and control signals may be communicated to each subarray via source umbilical cables 118. Data may be collected, also via source umbilical cables 118, from various sensors located on subarrays 114 and floats 116, such as acoustic transceivers and global positioning system ("GPS") units. Acoustic transceivers and GPS units so disposed help to accurately determine the positions of each subarray 114 during a survey. In some cases, subarrays 114 may be equipped with steering devices to better control their positions during the survey.

In site surveys, where imaging targets are at relatively shallow depths, streamers 104 may be quite short - on the order of 100 meters in length. For other surveys, where imaging targets are deeper, streamers 104 are often very long, on the order of 5 to 10 kilometers, so usually are constructed by coupling numerous shorter streamer sections together. In either case, each streamer 104 may be attached to a dilt float 120 at its proximal end (the end nearest vessel 102) and to a tail buoy 122 at its distal end (the end farthest from vessel 102). Dilt floats 120 and tail buoys 122 may be equipped with GPS units as well, to help determine the positions of each streamer 104 relative to an absolute frame of reference such as the earth. Each streamer 104 may in turn be equipped with acoustic transceivers and/or compass units to help determine their positions relative to one another. In many survey systems 100, streamers 104 include steering devices 124 attached at intervals, such as every 300 meters. Steering devices 124 typically provide one or more control surfaces to enable moving the streamer to a desired depth, or to a desired lateral position, or both. Paravanes 126 are shown coupled to vessel 102 via tow ropes 128. As the vessel tows the equipment, paravanes 126 provide opposing lateral forces that straighten a spreader rope 130, to which each of streamers 104 is attached at its proximal end. Spreader rope 130 helps to establish a desired crossline spacing between the proximal ends of the streamers. Power, control, and data communication pathways are housed within lead-in cables 132, which couple the sensors and control devices in each of streamers 104 to the control equipment 112 onboard vessel 102.

Collectively, the array of streamers 104 forms a sensor surface at which acoustic energy is received for recording by control equipment 112. In many instances, it is desirable for the streamers to be maintained in a straight and parallel configuration to provide a sensor surface that is generally flat, horizontal, and uniform. In other instances, an inclined and/or fan shaped receiving surface may be desired and may be implemented using control devices on the streamers such as those just described. Other array geometries may be implemented as well. Prevailing conditions in body of water 106 may cause the depths and lateral positions of streamers 104 to vary at times, of course. In various embodiments, streamers 104 need not all have the same length and need not all be towed at the same depth or with the same depth profile.

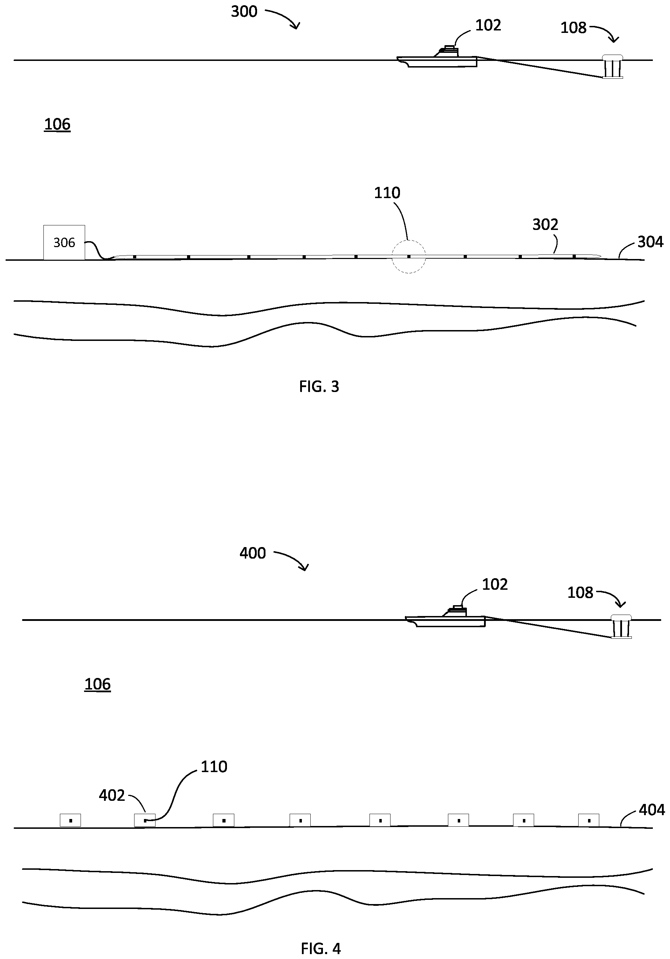

FIG. 3 illustrates an example ocean bottom cable survey system 300, in which a vessel 102 tows one or more sources 108 over an installation of one or more ocean bottom cables 302, each of which is disposed on a water bottom 304. Each cable 302 may include one or more sensors or sensor groups 110 disposed along its length, generally as shown. In turn, each of the cables may be coupled to a manifold 306 in which signals from the sensors may be aggregated and either stored or transmitted to a collection point, or both.

FIG. 4 illustrates an example ocean bottom node survey system 400, in which a vessel 102 tows one or more sources 108 over an installation of one or more ocean bottom nodes 402, each of which is disposed on a water bottom 404. Each node 402 may include one or more sensors or sensor groups 110 as shown. Signals generated by the sensors or sensor groups may be collected in the nodes for later retrieval, or may be transmitted to a collection point, or both.

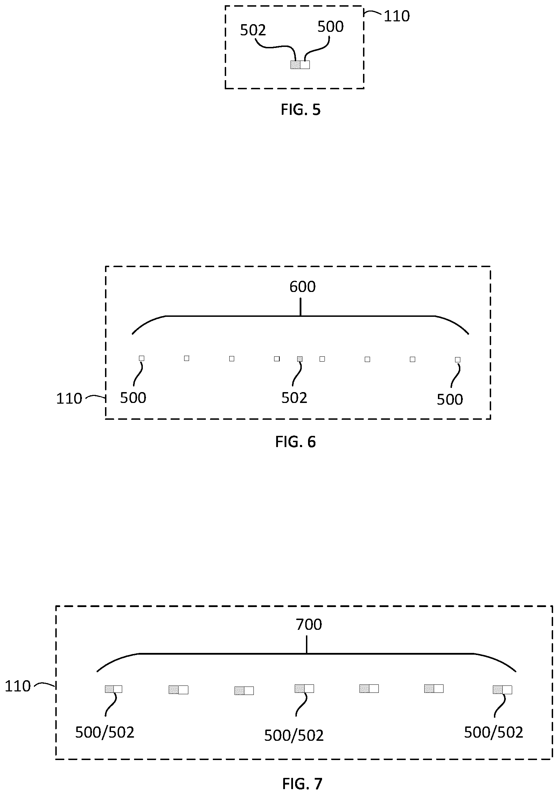

FIGS. 5, 6, and 7 illustrate several example arrangements consistent with embodiments for disposing sensors 110 in a streamer or cable 104 or in an ocean bottom node 402 or an ocean bottom cable 302. In each illustration, pressure sensors are indicated with white squares, while motion sensors are indicated with shaded squares.

In the arrangement of FIG. 5, each sensor location 110 comprises a single pressure sensor 500 collocated with a single motion sensor 502. In the arrangement of FIG. 6, each sensor location 110 comprises a set of pressure sensors 500 forming a single pressure sensor group 600. A motion sensor 502 is disposed substantially at the center of pressure sensor group 600. (It is also possible to employ a similar arrangement in which a single pressure sensor is disposed among a group of motion sensors.) Typically, the signals generated by sensors forming a sensor group are combined or aggregated in some way, such as by summation and/or averaging. Such combination or aggregation may be accomplished in any suitable manner, such as in an analog domain using appropriate electrical coupling, or in a digital domain using digital data processing. In general, a sensor group may include any number of sensors and may comprise either pressure sensors or motion sensors. Normally, however, only measurements of the same type in a group (e.g., pressure, velocity, or acceleration) would be subject to combination or aggregation. Thus, in the particular arrangement illustrated in FIG. 6, the measurements of pressure sensors 500 may be combined or aggregated into a single signal, while the measurements of motion sensor 502 would be preserved as a separate signal. In the arrangement of FIG. 7, each sensor location 110 comprises a group 700 of collocated pressure sensors 500 and motion sensors 502. In the latter arrangement, one aggregated signal can be generated from the pressure sensors in the group, while another aggregated signal can be generated from the motion sensors in the group. Various other permutations of the arrangements of FIGS. 5, 6, and 7 are also possible. For example, any of these arrangements may comprise pressure sensors only or motion sensors only.

Techniques and embodiments to be described herein may be employed in the context of any of the above or similar types of marine seismic survey systems.

### Previously Unrecognized Mechanism for Cross Feed in Marine Seismic Sensor Systems

It has not been previously understood in the art how cross feed can be caused as a result of seawater that leaks into connectors such as those that are disposed between the sections of seismic streamers or ocean bottom cables. The inventor hereof has discovered that such seawater leakage provides a conductive path between electrical signals on connector pins and the body of seawater in which the seismic streamer or cable is immersed. Under these conditions, electrical signals from a connector's pins can be conducted in seawater along the entire length of the exterior of the streamer or cable and may capacitively couple to hydrophones that are disposed inside the streamer or cable. The mechanism for this coupling is the parasitic capacitances that are formed, through the streamer fill material and the enclosing streamer jacket, between the electrodes of the hydrophone and the conformal layer of seawater that is disposed on the exterior surface of the streamer or cable.

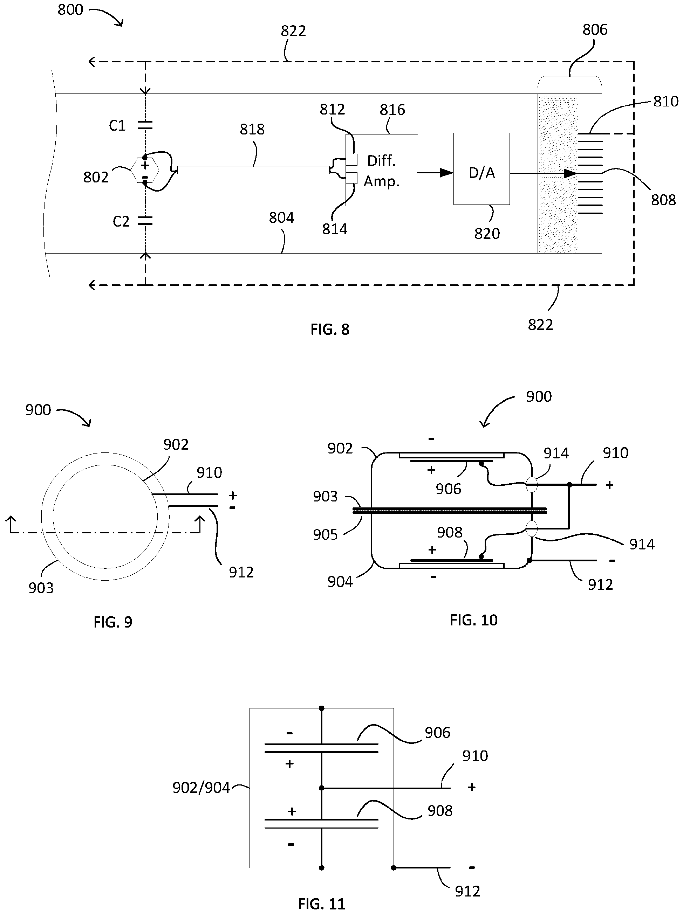

FIG. 8 illustrates this schematically. In FIG. 8, a portion of a seismic streamer section or ocean bottom cable section 800 is shown in see-through profile view. A hydrophone 802 is disposed inside an interior volume of the streamer or cable. The interior volume is defined by an enclosure, which in the illustrated case is a streamer jacket 804. Connectors, such as the illustrated connector 806, are disposed at one or both ends of the streamer or cable. When present, each connector is typically coupled to a corresponding connector on the end of another section of the streamer or cable. The adjoining section is not shown in FIG. 8 so as not to unduly complicate the drawing. Some of the pins in the connector, such as the illustrated pin 808, may be used to carry data signals. Other pins in the connector, such as the illustrated pin 810, may be used to carry power or control signals.

Hydrophone 802, or a group of such hydrophones, provides an output signal via positive and negative electrodes indicated in the drawing with "+" and "-" symbols. The hydrophone electrodes are shown coupled to respective inputs 812, 814 of a differential amplifier 816 via twisted-pair conductors 818. An output of the differential amplifier is coupled to an input of a digital to analog converter 820. The output of the digital to analog converter is shown coupled to data pin 808 in the connector.

When seawater infiltrates the connector, one or more conductive paths can be established along the length of the streamer via the conformal layer of seawater that is disposed on the outside of the streamer jacket, as generally indicated by dashed lines 822. Within the streamer, parasitic capacitances are present between the electrodes of each hydrophone and adjacent portions of the streamer jacket, as indicated schematically in the drawing by capacitors C1 and C2. These parasitic capacitances can couple unwanted signals from conductive paths 822 to the electrodes of the sensor, and thus onto the twisted pair conductors that are connected to the hydrophone electrodes. (It should be noted that, in any of the embodiments described herein, more than one twisted pair of conductors may be used, if desired. For example, a twisted quad set of conductors comprising two twisted pairs may be used in any of the places where a single twisted pair is shown in the illustrations.) When this occurs, the unwanted signals are added to the desired signals that are generated by the hydrophones. The unwanted signals are therefore coupled to the differential amplifier inputs, along with the desired hydrophone signals, via the one or more twisted pairs of conductors.

The inventor hereof has discovered that, when the parasitic capacitive coupling between the respective electrodes of a hydrophone and the adjacent portions of a streamer jacket is unbalanced (i.e., when C1 and C2 are not equal), then cross feed signals from conductive paths 822 will appear on the output of the differential amplifier in such systems. This occurs because unequal capacitive coupling of the unwanted signals to the two hydrophone electrodes causes the unwanted signals to be coupled to the electrodes with different amplitudes. To the extent the unwanted signals are coupled to the electrodes with differing amplitudes, the unwanted signals are not coupled to the differential amplifier inputs in "common mode." When this occurs, the unwanted signals are not rejected by the differential amplifier as desired, but instead are amplified along with the desired hydrophone signals and are presented along with the desired signals at the output of the amplifier.

The inventor hereof has further discovered that the structure of conventional hydrophones inherently causes unequal capacitive coupling between the hydrophone electrodes and the adjacent portions of a streamer jacket. As a consequence, conventional hydrophones cause unwanted cross feed to appear on the output of an associated differential amplifier due to the mechanisms just described.

FIGS. 9-11 illustrate this problem schematically. FIG. 9 is a top view of a conventional marine seismic hydrophone 900 known as a model T2BX, which model is manufactured by Teledyne Technologies Incorporated. FIG. 10 is a sectional side view of the T2BX hydrophone taken along the section indicated in FIG. 9. Hydrophone 900 is a generally pill shaped device constructed using two opposed metal shells 902, 904 joined to one another at respective flanges 903, 905. The shells are electrically conductive and may be constructed, for example, from a Be/Cu alloy. Two piezoelectric elements 906, 908 are adhered to opposite inside-facing surfaces of the shells such that each of them forms a flexural diaphragm. The polarities of the piezoelectric elements are oriented in opposite directions such that same-poled surfaces of each element face the interior of the hydrophone. The piezoelectric elements are wired in parallel. A positive output node 910 of the hydrophone is formed by electrically coupling the inward-facing surfaces of the piezoelectric elements together. This is accomplished with electrically conductive feed-through pins that are encapsulated in metal-collared glass 914. The metal collars are soldered into holes formed in shells 902, 904, wires internal to the device are soldered onto the respective pins, and another wire is soldered to the pins on the outside of the device, as shown. A negative output node 912 is formed by soldering a wire to the exterior surface of one of the shells, also as shown.

FIG. 11 presents an equivalent circuit of the hydrophone shown in FIG. 10. As FIG. 11 illustrates, the wiring arrangement of the conventional hydrophone causes the shells 902, 904 to become part of the negative output node along with the negatively polarized faces of the piezoelectric elements. In contrast to this, the positive output node of the conventional hydrophone comprises only the positively polarized faces of the piezoelectric elements. The result of this arrangement is that the surface areas of the two output nodes are unequal. More specifically, because the negative output node includes the shells 902, 904 and the positive output node does not, the conductive surface area of the negative output node is substantially larger than is the conductive surface area of the positive output node. Consequently, when the conventional hydrophone is placed inside an enclosure such as a streamer 800 (see FIG. 8), the parasitic capacitances C1 and C2 between the respective output nodes of the hydrophone and the adjacent surfaces of the streamer jacket are unequal. That is, C1 ≠ C2. As was explained above, this results in cross feed being coupled with different amplitudes to the two sensor output nodes, which in turn causes the unwanted cross feed to appear on the output of the differential amplifier along with the desired signal from the hydrophone.

### Example Embodiments

A variety of techniques will now be described for overcoming the above-described problems by balancing the capacitive coupling between the electrodes of a seismic sensor and the adjacent portions of the sensor's enclosure.

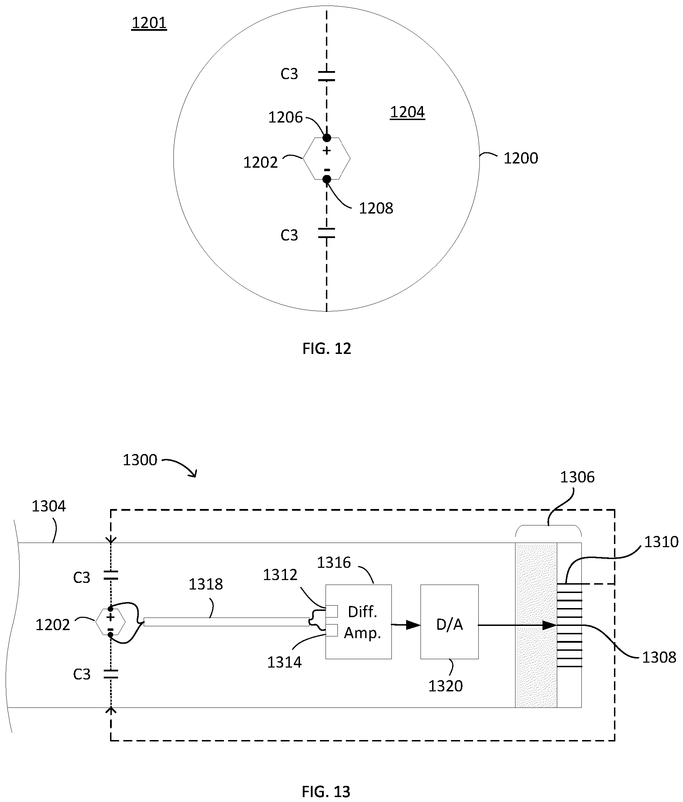

In general, and referring now to FIG. 12, an enclosure 1200 is configured to be immersed in a body of water 1201. Such an enclosure may comprise, for example, the jacket of a seismic streamer or cable, or the housing of a seismic node. A sensor 1202 is disposed within an interior volume 1204 defined by the enclosure. The sensor may comprise, for example, a hydrophone (pressure) sensor, or a motion sensor such as a geophone or an accelerometer. The sensor comprises a positive output node 1206 and a negative output node 1208. The physical characteristics of the output nodes and the placement of the sensor within the enclosure are designed such that parasitic capacitances between the output nodes and the enclosure are substantially equal to one another. That is, a parasitic capacitance between the enclosure and the positive output node of the sensor is substantially equal to a parasitic capacitance between the enclosure and the negative output node of the sensor. Both such parasitic capacitances are labeled C3 in the drawing. In various embodiments, equality of the two parasitic capacitances may be achieved by designing the sensor such that the conductive surface areas of both of its output nodes are substantially equal, or by disposing the sensor within the enclosure so that the distances between the respective sensor output nodes and the adjacent enclosure surfaces result in equal parasitic capacitances, or by a combination of both techniques.

FIG. 13 illustrates an example system that utilizes the sensor and enclosure arrangement of FIG. 12. In the example of FIG. 13, the enclosure comprises the outer jacket 1304 of a streamer section 1300. A sensor 1202 is disposed within the interior volume of the streamer in a manner consistent with the arrangement of FIG. 12 such that parasitic capacitances C3 between the output nodes of the sensor and the adjacent portions of the streamer jacket are substantially equal, as shown. The positive and negative output nodes of the sensor are coupled to first and second signal inputs 1312, 1314 of a differential amplifier. The coupling of the output nodes to the differential amplifier inputs may be accomplished using any suitable technique. For example, one or more twisted pairs of conductors 1318 may be used. If desired, the output of the differential amplifier may be coupled to an analog to digital converter 1320. Either the output of the differential amplifier or the output of the digital to analog converter may be sent to a data recording system 112 (see FIG. 1) using a suitable communication system. For example, either output may be coupled to the recording system via one or more data telemetry pins 1308 in a connector 1306 disposed at an end of the streamer section. In this manner, when the connector is infiltrated with water, unwanted cross feed signals from another connector pin, such as from a power or control pin 1310 of the connector, will be coupled with substantially equal amplitudes to each of the positive and negative output nodes of the sensor via the substantially equal parasitic capacitances C3. Consequently, the cross feed signals will appear as common mode signals at the inputs of the differential amplifier and will be rejected (canceled) by the differential amplifier as desired. Thus, the amplified signal appearing at the output of the amplifier will represent the sensor output with dramatically reduced or eliminated cross feed noise.

Experiments have demonstrated that, by employing the techniques described herein, a reduction of cross feed signal amplitude of approximately 30 dB can be achieved.

As was explained above, sensor 1202 may take a variety of forms, provided that the physical characteristics of the sensor output nodes and the position of the sensor within the streamer or other enclosure are such that the parasitic capacitances between the sensor output nodes and the enclosure are substantially balanced. An example sensor type will now be described that may have particular utility in such applications.

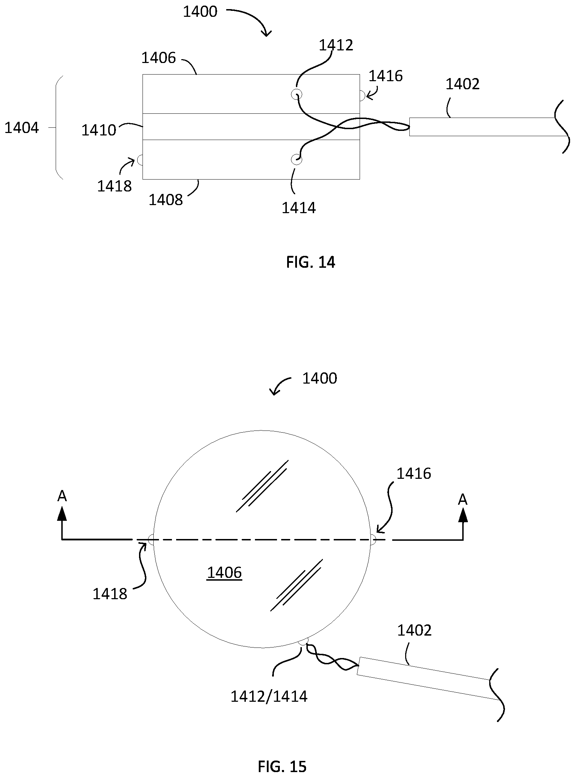

Referring now to FIGS. 14 and 15, a hydrophone 1400 is shown connected to a twisted pair of wires 1402. The hydrophone includes a hermetically sealed device body 1404 formed by two electrically conductive enclosures 1406, 1408 disposed on opposite sides of an electrically insulative member 1410. Electrical coupling of the twisted pair of wires to the hydrophone may be accomplished by soldering the wires directly to an exterior surface of the respective electrically conductive enclosures as shown at 1412, 1414. Through holes 1416, 1418 formed in each of the electrically conductive enclosures (the through holes will be further described below) are plugged, such as with solder, as shown.

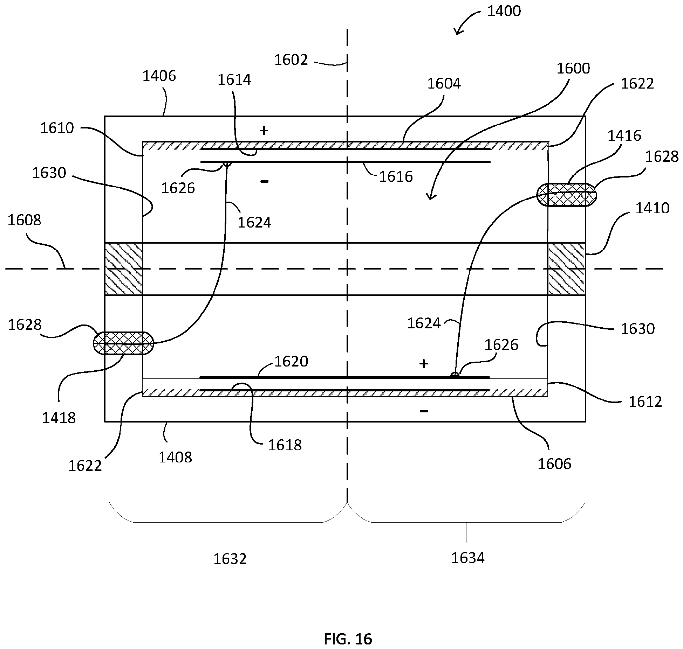

FIG. 16 is a sectional view of hydrophone 1400 taken across section A-A indicated in FIG. 15. As can be seen in this view, the hydrophone device body defines an interior void 1600 and a central longitudinal axis 1602. Each of the electrically conductive enclosures includes a respective flat portion 1604, 1606 oriented orthogonal to the central longitudinal axis and disposed at one of two opposite ends of the central longitudinal axis. The electrically conductive surfaces on the exterior of the device body consist of the exterior surfaces of enclosures 1406 and 1408. Moreover, in the illustrated embodiment, enclosures 1406 and 1408 have identical shapes and sizes. Thus, the electrically conductive surfaces of the exterior of the device body are symmetrical about a plane 1608 that passes through the electrically insulative member in a direction orthogonal to the central longitudinal axis.

A first piezoelectric element 1610 is fixedly attached to the flat portion of electrically conductive enclosure 1406, and a second piezoelectric element 1612 is fixedly attached to the flat portion of electrically conductive enclosure 1408. The positive electrode 1614 of piezoelectric element 1610 is electrically coupled to enclosure 1406, while the negative electrode 1616 of the piezoelectric element faces the interior void. The negative electrode 1618 of piezoelectric element 1612 is electrically coupled to enclosure 1408, while the positive electrode 1620 of the piezoelectric element faces the interior void.

The electrical and mechanical coupling of the piezoelectric elements to the respective enclosures may be accomplished by any suitable means. In the illustrated embodiment, electrical and mechanical coupling are both accomplished with a layer of electrically conductive adhesive 1622 disposed between the piezoelectric elements and the flat portions of the enclosures. In other embodiments, the piezoelectric elements may be soldered to the enclosures.

The negative electrode 1616 of piezoelectric element 1610 is electrically coupled to opposite enclosure 1408, and the positive electrode 1620 of piezoelectric element 1612 is electrically coupled to opposite enclosure 1406. In the illustrated embodiment, the electrical coupling of the interior facing electrodes to the respective enclosures is accomplished with flexible wires 1624 that are soldered at one end to the interior facing electrode of one of the piezoelectric elements, as shown at 1626, and soldered at the other end to a respective one of the enclosures, as shown at 1628.

Although enclosures 1406, 1408 are identical pieces in the illustrated embodiment, the through holes 1416, 1418 that are formed in respective side walls 1630 may be arranged on opposite sides of the device body. In this manner, the two wires 1624 may be disposed in opposite longitudinal halves 1632, 1634 of the interior void to prevent them from touching one another during operation of the device. In other embodiments, the interior facing electrodes may be electrically coupled to the opposite enclosures by other means. For example, they may be coupled using insulated wires. In the embodiment shown, each wire terminates in, and is fixed inside, a respective one of through holes 1416 by means of solder 1628, or by means os an electrically conductive sealant, such as an electrically conductive epoxy. In such embodiments, solder 1628 serves both to electrically couple the wire to the enclosure and also to plug the through hole so as to ensure that the device is hermetically sealed.

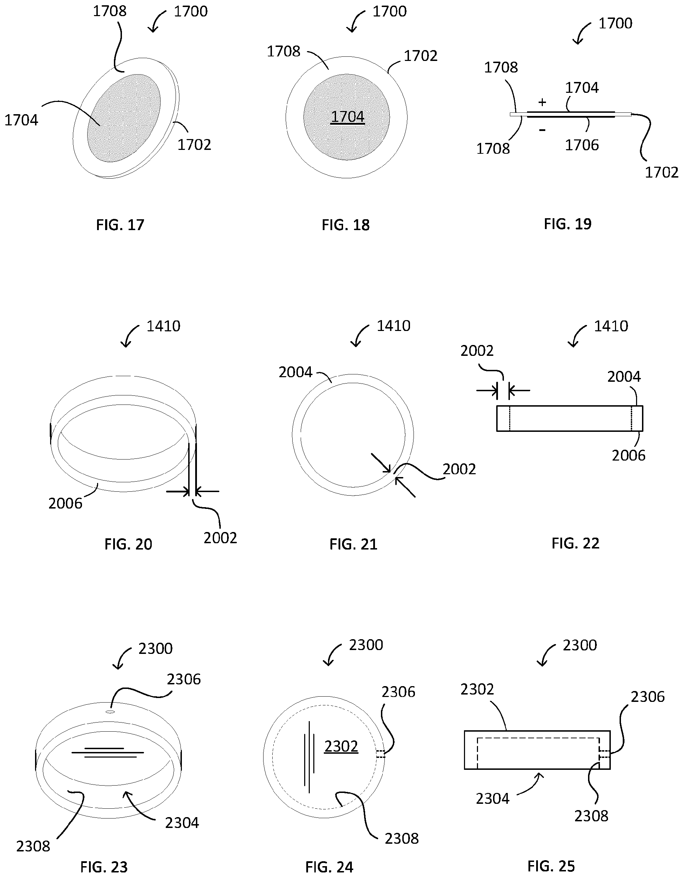

Piezoelectric elements 1610, 1612 may be of any suitable shape and type. In the illustrated embodiment, the piezoelectric elements comprise ceramic discs with metalized regions formed on opposite sides thereof forming the positive and negative electrodes of the element. FIGS. 17-19 illustrate such a piezoelectric element 1700 in more detail. Ceramic disc 1702 is circular in shape and has silvered circular areas 1704, 1706 centered on opposite sides of the disc. In other embodiments, different metals may be used to form the electrodes. A silver-free area 1708 of the ceramic disc remains between the radially outermost extent of the silvered area and the outer perimeter of the disc to reduce leakage current that may develop through that region when contaminants such as moisture, solder flux and the like come in contact with the piezoelectric element. As persons having skill in the art will appreciate, the size of the silver-free area will depend on a variety of factors, including the materials being used to construct the device and the low frequency performance characteristics desired for the device.

Electrically insulative member 1410 may also be of a variety of shapes and sizes, and may be made from any suitable material. In the illustrated embodiment, member 1410 takes the shape of an open cylinder or ring, as is shown in more detail in FIGS. 20-22. To enhance the structural integrity of the device body and to facilitate assembly, both the shape and the thickness 2002 of the member may be designed to match a corresponding shape and thickness of the side walls 1630 of enclosures 1406, 1408. The member may be constructed using any suitably rigid electrically insulative material such as, for example, glass, ceramic, rigid plastic, or a glass/phenolic/epoxy composite material such as is commonly used in the construction of printed circuit boards. Other materials may also be used.

A variety of techniques may be used to fixedly attach enclosures 1406, 1408 to member 1410. In some embodiments, soldering, brazing, or welding may be used to attach the enclosures to the insulative member. In such embodiments, the mating surfaces of member 1410 may be metalized prior to the soldering, brazing, or welding. In other embodiments, an adhesive may be used to attach the enclosures to the insulating member.

Similarly, enclosures 1406, 1408 may also take a variety of sizes and shapes. In various embodiments, the two enclosures may be formed as identical pieces so as to ensure symmetry of the electrically conductive external surfaces of the device body, as was describe above. An example of such a piece is illustrated in more detail in FIGS. 23-25. Referring now to those figures, an enclosure 2300 may take the form of a blind cylinder (blind in the sense that the cylinder is open at one end and is closed at its other end). A small through hole 2306 is formed in the side wall 2308 of the cylinder to receive the interior wires of the device in a manner that will be described further below. The enclosure may be formed from any suitable electrically conductive material having sufficient rigidity to maintain the overall structural integrity of the device body when exposed to pressure, but having a sufficient spring constant to allow the flat portion 2302 to flex inward and outward responsive to changes in pressure. For example, the enclosure may be constructed from any copper alloy, including brass. Other materials may also be used.

### Methods of Manufacture

Various example techniques will now be described for constructing hydrophones in accordance with embodiments.

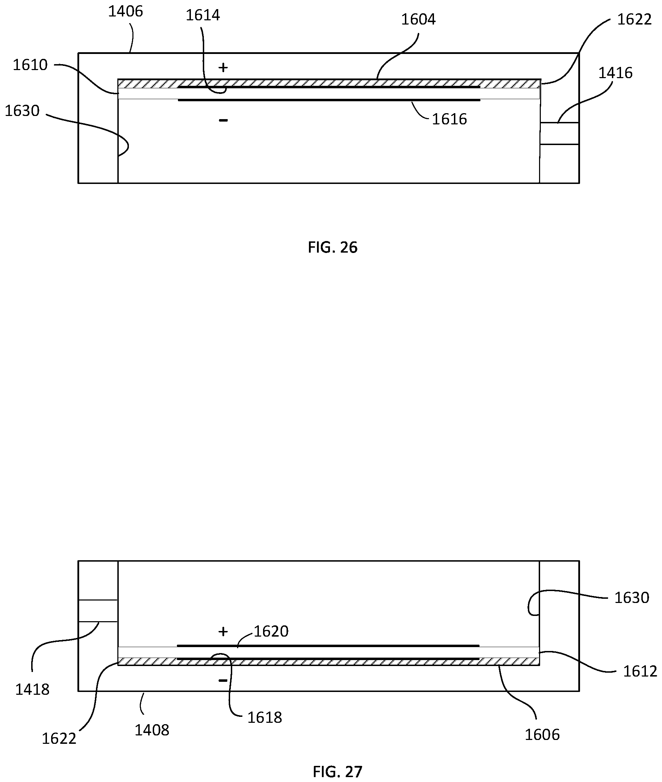

FIGS. 26 and 27 illustrate manufacturing steps in which a piezoelectric electric element 1610, 1612 is fixedly attached to each of two electrically conductive enclosures 1406, 1408 (in the illustrated case, blind cylinders) according to any of the techniques described above. In various embodiments, the sizes of the piezoelectric elements (e.g., their diameters) may be designed to match the size of the interior of the enclosure (e.g., the inside diameter of the blind cylinder) so that the inside surfaces of the enclosure can be used to center the piezoelectric element within the enclosure, as shown.

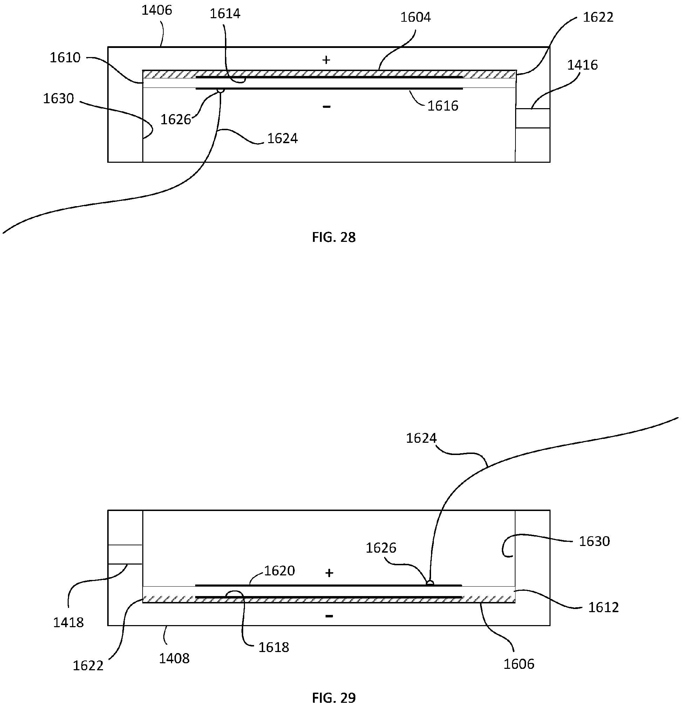

FIGS. 28 and 29 illustrate manufacturing steps in which a wire 1624 is soldered onto the interior facing electrode of each of the piezoelectric elements. In various embodiments, solder joints 1626 may intentionally be placed at an offset from the center of the electrode to which it is attached, to ensure that any de-polarization of the ceramic material of the piezoelectric element caused by the soldering step does not impact the functionality of the polarization near the center of the device. For example, the solder joint may be placed near the outer edge of the silvered electrode area, as shown. In various embodiments, uninsulated, sold-core wire may be used and may be attached to the respective electrode using lead-tin-solver eutectic solder having a melting point of approximately 179° C. Other materials and coupling techniques may also be used. At this step in manufacturing, the wires 1624 may be left longer than they will be in the final device, to facilitate the manufacturing steps that follow. It should be noted that the steps depicted in FIGS. 26-28 may be performed in any order. For example, wires 1624 may be soldered onto the piezoelectric elements before the piezoelectric elements are attached to the enclosures, or vice versa.

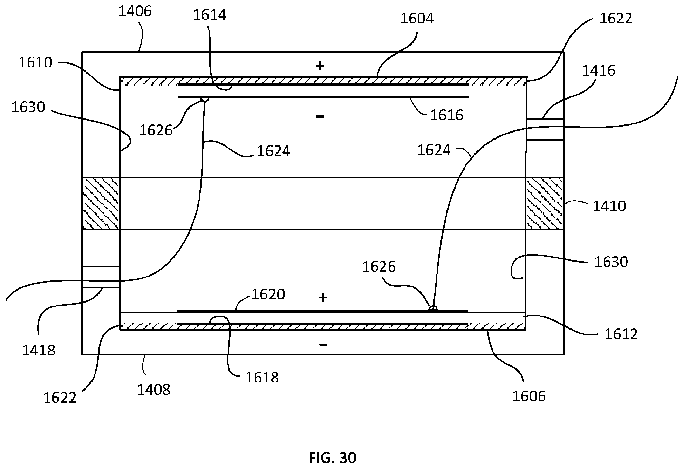

FIG. 30 illustrates a manufacturing step in which electrically insulative member 1410 (in the illustrated case, an electrically insulative ring) is interposed between the open ends of enclosures 1406 and 1408. Each wire 1624 is fed through the interior void of the insulative member (e.g., through the insulative ring) and brought out via the through hole 1416, 1418 in the side wall of the opposite enclosure, as shown. At this point in the manufacture, the wires may protrude from the through holes on the outside of the device body. In various embodiments, to accomplish attaching the enclosures to the insulative member, the mating surfaces of the insulative member may be tinned with a heavy coating of suitable low temperature solder such as a bismuth-tin eutectic alloy having a melting point of approximately 137° C. In embodiments that employ soldering, once tinned, the mating parts may be coated with a flux and assembled as shown and the assembly may be heated in accordance with the reflow schedule of the low temperature solder being used so that the device body thereby becomes hermetically sealed. In embodiments that employ brazing or welding, the assembly may be clamped and welded or brazed as appropriate. In embodiments that utilize an adhesive, the tinning and heating steps described above may be omitted and, instead, the adhesive may be applied to the mating surfaces and a curing schedule corresponding to the adhesive may be followed.

Finally, following the removal of heat, if any, through holes 1416, 1418 may be sealed with low temperature solder while wires 1624 are inside them, and then the portions of the wires that protrude from the device body may be trimmed or otherwise removed, thus yielding a device as shown in FIG. 16.

As was mentioned above, devices according to embodiments may have a variety of shapes and sizes. In various embodiments, the insulative ring may be on the order of ¼ inch in height (measured in the dimension of the central axis), and the outside diameter of the device body may be on the order of ¾ inch to 1 inch. In some embodiments, the height of the insulative ring may be less than or equal to the height of the electrically conductive enclosures (also measured in the dimension of the central axis). In still further embodiments, the body of such a device may have transverse and longitudinal dimensions that are both small enough so that the device may fit inside the confines of a submersible container such as a seismic streamer, cable, or node.

### Methods of Use

As was described above, devices according to embodiments feature symmetrical electrically conductive surfaces on their exteriors. For this reason, when such devices are positioned equidistant from the adjacent outer surfaces of the relevant underwater container (e.g., along the central longitudinal axis of a seismic streamer or cable), the device will be highly resistant to cross feed signals that couple from outside the container.

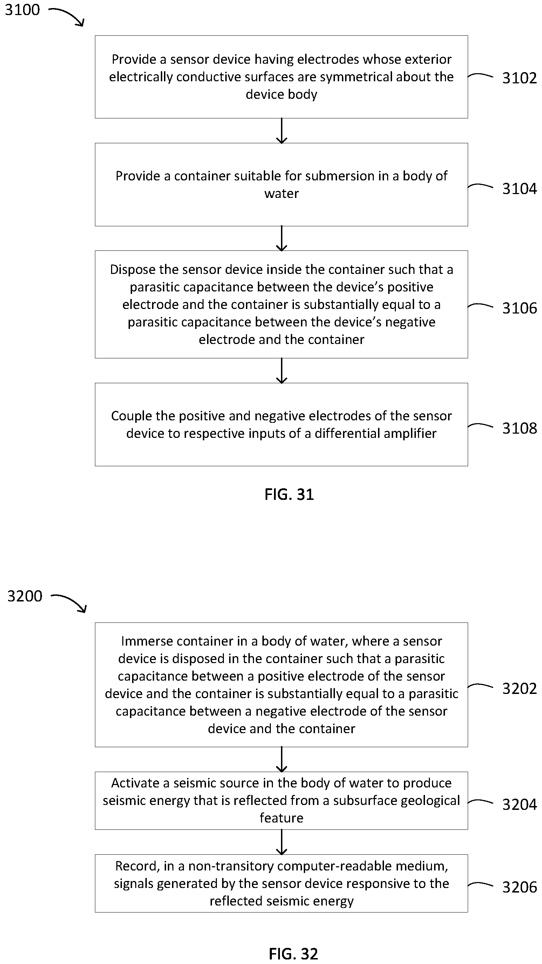

Thus, FIG. 31 illustrates a general method 3100 for using sensor devices in accordance with embodiments. At step 3100, a sensor device is provided such that the device has electrodes whose exterior electrically conductive surfaces are symmetrical about the device body. At step 3104, a container is provided such that the container is suitable for submersion in a body of water. Such a container may comprise, for example, a seismic streamer or cable, or a seismic node. At step 3106, the sensor device is disposed inside the container in a manner such that a parasitic capacitance between the device's positive electrode and the container is substantially equal to a parasitic capacitance between the device's negative electrode and the container. By way of example, the device may be positioned along the longitudinal central axis of a seismic streamer or cable. By way of further example, if the enclosure of a seismic node exhibits symmetry in three orthogonal axes such that the node itself defines a center of symmetry, then the sensor may be placed within the node such that the sensor's center of symmetry is collocated with the node's center of symmetry. At step 3108, the positive and negative electrodes of the sensor device are coupled to respective inputs of a differential amplifier, so that common mode cross feed present on the two electrodes is rejected (canceled) by the differential amplifier. In various embodiments, groups of such sensor devices may be used. In the latter embodiments, an aggregated differential signal may be produced by the sensors in the group and coupled to the differential amplifier, if desired.

FIG. 32 illustrates a general method 3200 for manufacturing a geophysical data produce using any of the embodiments described above. At step 3202, a sensor device as described above is positioned in a submersible container, for example as described above in relation to method 3100. At step 3204, one or more seismic sources are activated in the body of water to produce reflections from subsurface geological features. At step 3206, signals generated by the sensor device or a group of such devices are recorded in a non-transitory computer-readable medium, thereby completing the manufacture of the geophysical data product, which comprises the computer-readable medium so produced. If desired, the signals recorded may be derived from one or more differential amplifiers to which the outputs of the sensor devices are coupled as described above.

Multiple specific embodiments have been described above and in the appended claims. Such embodiments have been provided by way of example and illustration. Persons having skill in the art and having reference to this disclosure will perceive various utilitarian combinations, modifications and generalizations of the features and characteristics of the embodiments so described. For example, steps in methods described herein may generally be performed in any order, and some steps may be omitted, while other steps may be added, except where the context clearly indicates otherwise. Similarly, components in structures described herein may be arranged in different positions or locations, and some components may be omitted, while other components may be added, except where the context clearly indicates otherwise. Moreover, components or features of one described embodiment may be combined with, or may replace, components or features other described embodiments. The scope of the disclosure is intended to include all such combinations, modifications, and generalizations as well as their equivalents.

## Claims

1. A hydrophone, comprising:
a hermetically sealed device body defining an interior void and a central longitudinal axis and comprising a first electrically conductive enclosure and a second electrically conductive enclosure disposed on opposite sides of an electrically insulative member, wherein each electrically conductive enclosure comprises a flat portion oriented orthogonal to the central longitudinal axis, and wherein electrically conductive surfaces of the exterior of the device body are symmetrical about a plane that passes through the electrically insulative member in a direction orthogonal to the central longitudinal axis;
a first piezoelectric element fixedly attached to the flat portion of the first electrically conductive enclosure with its positive electrode electrically coupled to the first electrically conductive enclosure and its negative electrode facing the interior void; and
a second piezoelectric element fixedly attached to the flat portion of the second electrically conductive enclosure with its negative electrode electrically coupled to the second electrically conductive enclosure and its positive electrode facing the interior void;
wherein the negative electrode of the first piezoelectric element is electrically coupled to the second electrically conductive enclosure and the positive electrode of the second piezoelectric element is electrically coupled to the first electrically conductive enclosure.

2. The hydrophone of claim 1:
wherein the flat portions of the electrically conductive enclosures are disposed at opposite ends of the central longitudinal axis.

3. The hydrophone of claim 1 or 2:
wherein each of the electrically conductive enclosures comprises a blind cylinder, preferably
wherein the electrically insulative member comprises an open cylinder.

4. The hydrophone of any preceding claim:
wherein each of the electrically conductive enclosures comprises a copper alloy,
preferably wherein each of the electrically conductive enclosures comprises brass.

5. The hydrophone of any preceding claim, wherein:
the negative electrode of the first piezoelectric element is electrically coupled to the second
electrically conductive enclosure by means of a first flexible electrical conductor; and the positive electrode of the second piezoelectric element is electrically coupled to the first
electrically conductive enclosure by means of a second flexible electrical conductor.

6. The hydrophone of claim 5:
wherein the first flexible electrical conductor and the second flexible electrical conductor are disposed in opposite longitudinal halves of the interior void; or
wherein flexible electrical conductor terminates in a plugged through hole located in a side wall of the electrically conductive enclosure to which it is coupled, preferably
wherein the through hole is plugged with solder or an electrically conductive sealant.

7. The hydrophone of any preceding claim, wherein:
a negative electrode of the first piezoelectric element faces an interior of the sensing element; and
a positive electrode of the second piezoelectric element faces the interior of the sensing element.

8. The hydrophone of any preceding claim:
wherein each of the piezoelectric elements is fixedly attached to its respective electrically conductive enclosure by means of electrically conductive adhesive.

9. The hydrophone of any preceding claim:
wherein the insulative ring comprises a material selected from the group consisting of:
glass/phenolic/epoxy composite, rigid plastic, ceramic, and glass.

10. The hydrophone of any preceding claim:
wherein a transverse dimension and a longitudinal dimension of the device body are such that the
device body fits inside a seismic streamer, cable, or node.

11. A hydrophone, comprising:
an electrically insulative ring;
first and second shallow blind cylinders fixedly attached on opposite sides of the insulative ring such that open ends of the cylinders mate with the insulative ring and interior surfaces of the blind ends of the cylinders face one another along an axis that passes through the insulative ring;
a first piezoelectric element fixedly attached to the interior surface of the blind end of the first cylinder; and
a second piezoelectric element fixedly attached to the interior surface of the blind end of the second cylinder;
wherein an interior facing side of the first piezoelectric element is electrically connected to the second cylinder, and an interior facing side of the second piezoelectric element is electrically connected to the first cylinder.

12. The hydrophone of claim 11, wherein:
the electrical connection of the interior facing side of the first piezoelectric element with the second cylinder comprises a first electrical conductor, one end of which is fixed in a through hole formed in a wall of the second cylinder; and
the electrical connection of the interior facing side of the second piezoelectric element with the first cylinder comprises a second electrical conductor, one end of which is fixed in a through hole formed in a wall of the first cylinder, preferably
wherein the first electrical conductor and the second electrical conductor are fixed in their respective through holes by means of solder.

13. The hydrophone of claim 11 or 12:
wherein each of the cylinders comprises a copper alloy.

14. The hydrophone of any of claims 11 to 13:
wherein the insulative ring comprises a material selected from the group consisting of:
glass/phenolic/epoxy composite, rigid plastic, ceramic, and glass.

15. A method of manufacturing a hydrophone, comprising:
providing first and second identical electrically conductive blind cylinders, each having a through hole in a longitudinal wall thereof;
fixedly attaching a first piezoelectric element to an interior side of the blind end of the first cylinder with the positive electrode of the first piezoelectric element electrically coupled to the first cylinder;
soldering a first electrical conductor to the negative electrode of the first piezoelectric element;
fixedly attaching a second piezoelectric element to an interior side of the blind end of the second cylinder with the negative electrode of the second piezoelectric element electrically coupled to the second cylinder;
soldering a second electrical conductor to the positive electrode of the second piezoelectric element;
interposing an electrically insulative ring between the open ends of the blind cylinders;
feeding the first electrical conductor through the insulative ring and through the through hole in the second cylinder;
feeding the second electrical conductor through the insulative ring and through the through hole in the first cylinder;
fixedly attaching the cylinders to opposite sides of the insulative ring to form a hermetically sealed device body;
filling the through holes in the blind cylinders with solder; and
removing portions of the electrical conductors that protrude outside the device body.
